# EUROPEAN PATENT APPLICATION

(11) **EP 2 124 443 A1**
(43) Date of publication of application: **25.11.2009**
(21) Application number: 07859983.4
(22) Date of filing: 21.12.2007
(51) Int. Cl.: H04N 7/173, G11B 27/10, H04N 5/76, H04N 5/765, H04N 5/91

(54) **PROGRAM DATA MANAGEMENT SERVER, IDENTIFIER ALLOCATION DEVICE, PROGRAM DATA MANAGEMENT METHOD AND COMPUTER PROGRAM**

(30) Priority: 25.12.2006 JP 2006347681
(71) Applicant: PTP, Inc., Tokyo, 151-0053 (JP)
(72) Inventor: ARIYOSHI, Masayasu, Tokyo 151-0053 (JP); SAKAGUCHI, Hitoshi, Tokyo 151-0053 (JP); KOMORIYA, Takeru, Tokyo 151-0053 (JP)
(74) Representative: Smeets, Eugenius Theodorus J. M.
(86) International application number: PCT/JP2007/074753
(87) International publication number: WO 2008/078717

(57) **Abstract**

Recorded program images can be searched by free keywords related to the images. A management server is connected through a network with a digital recording and playback device that can record and play back program data, so that a subtitle broadcast text and its associated time index is output. An input means for the digital recording and playback device inputs a searching keyword to specify a program image, followed by determining whether or not the received searching keyword is recorded in the subtitle broadcast text recorded on a database in advance, then if determining that the received searching keyword is recorded, the corresponding subtitle broadcast text is extracted, thereby the management server obtains a time index from the database to play back a pin-point of the program data that is linked to the subtitle broadcast text and delivers it to the digital recording and playback device.

## Description

### FIELD OF THE INVENTION

The present invention is related to a program data management server, program data management method and computer program, and is particularly related to a program data management server, program data management method and computer program for, for example, searching subtitle broadcast.

### BACKGROUND OF THE INVENTION

In recent years, recording and playback devices such as a hard disc recorder that allows recording and playing back television broadcasts (hereinafter referred to as "TV") have become more extensive. Today, regarding all broadcast programs to which a subtitle can be attached, the Ministry of Internal Affairs and Communications has established "the target of prevailing subtitle broadcast", which aims to deal with subtitle broadcasting by 2007. Thus many of the television signals that will be broadcasted from now on are expected to include subtitle broadcast signals.

Besides, image data etc. recorded to the recording and playback device is increasing in accordance with the increase in the capacity of the hard disk. As a result, in order to efficiently play back desired image data from a large amount of image data etc., it becomes indispensable to search the image data etc.

PATENT DOCUMENT 1 discloses a technique to perform this kind of search. In this technique, when a program (image data) is recorded to a recording medium, its related electronic program information is also recorded together. And then, when a user searches a program, the contents of the electronic program information are used.

PATENT DOCUMENT 1: JPA 2004-64519

### SUMMARY OF THE INVENTION

### PROBLEM TO BE SOLVED BY THE INVENTION

However, since the electronic program information has not been created for searching programs recorded in the recording and playback device, the technique disclosed in PATENT DOCUMENT 1 cannot perform an advanced search such as described as follows.

That means, although the electronic program information contains text information describing the contents of the program itself, the information does not contain all information regarding the program elements, for example, transcribed texts of the contents of conversations between characters in a drama.

Therefore, in the above example, the drama cannot be searched based on the conversations between characters in the drama.

Thus, the problem of the present invention is to make it possible to perform an advanced search for television programs by an approach different from PATENT DOCUMENT 1.

### MEANS OF SOLVING THE PROBLEM

In order to solve the above-mentioned problem, the program data management server of the present invention comprises:
an allocating means for allocating a specific identifier to any one of the elements among the image data, audio data and subtitle broadcast text data, which constitute a television signal;
a recording medium in which the identifier allocated by the allocating means, and the element are recorded in accordance with each other; and
a transmitting means for, when data indicating the element is transmitted, transmitting an identifier corresponding to said data.

As an example, the identifier comprises information allowing the television signal to be identified and a time index attached to the element.

In addition, although the data indicating the element may be transmitted from a recording device in which at least the image data and the audio data are recorded, it may also be transmitted from communication equipment including mobile phone and an information-processing device including a personal computer.

As an example, the above program data management server can be configured as follows. That is, one side is configured as
an identifier allocation device comprising:
   a receiving means for receiving a television signal including image data, audio data and subtitle broadcast text data;
   a separating means for separating the television signal received by the receiving means; and
   an allocating means for allocating a specific identifier to the data element separated by the separating means; as well as
the other side is configured as
a program data management device comprising:
   a recording medium in which the identifier allocated by the above identifier allocation device and the element are recorded in accordance with each other; and
   a transmitting means for, when data indicating the element is transmitted, transmitting the identifier corresponding to said data.

Furthermore, the program data management method of the present invention comprises:
a step of allocating an identifier to any one of the elements among image data, audio data and subtitle broadcast text data, which constitute a television signal;
a step of recording the identifier and the element in accordance with each other; and
a step of, when data indicating the element is transmitted, transmitting an identifier corresponding to said data.

In addition, the computer program of the present invention allows the program data management server to perform each of these steps.

### EMBODYMENT OF THE INVENTION

### Referring to drawings, embodiments of the present invention will be described hereinafter.

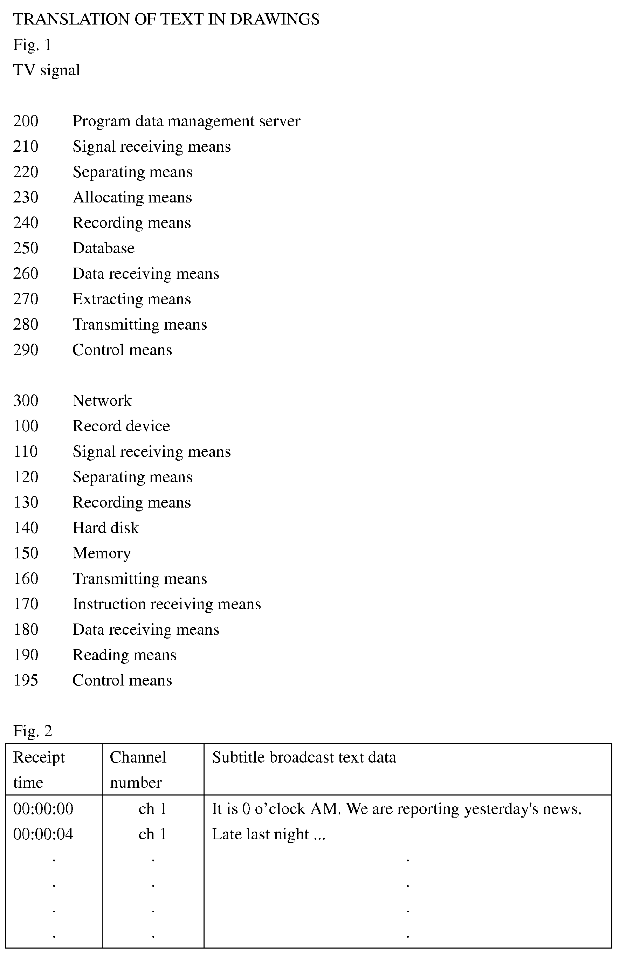

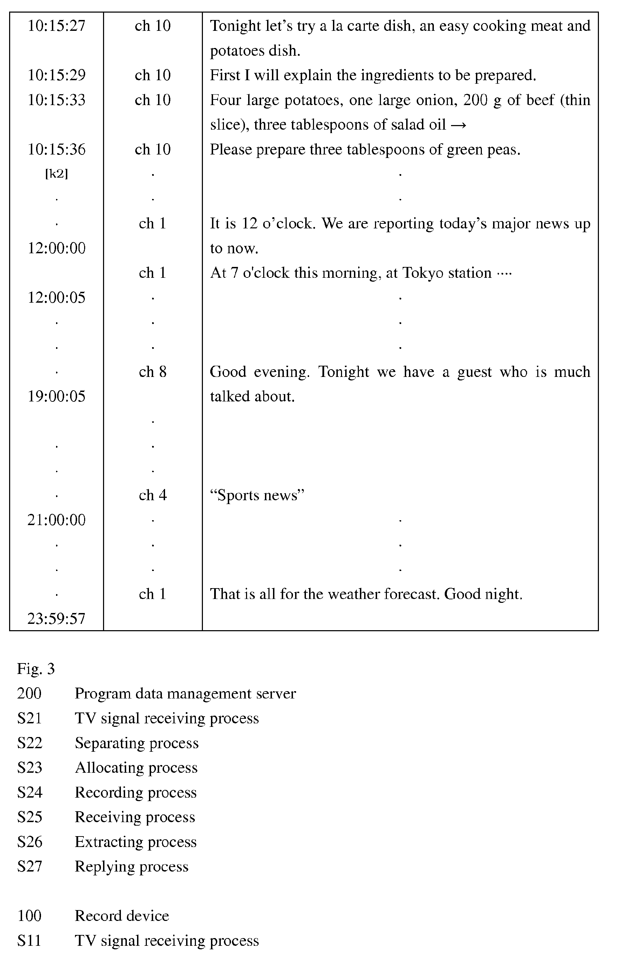

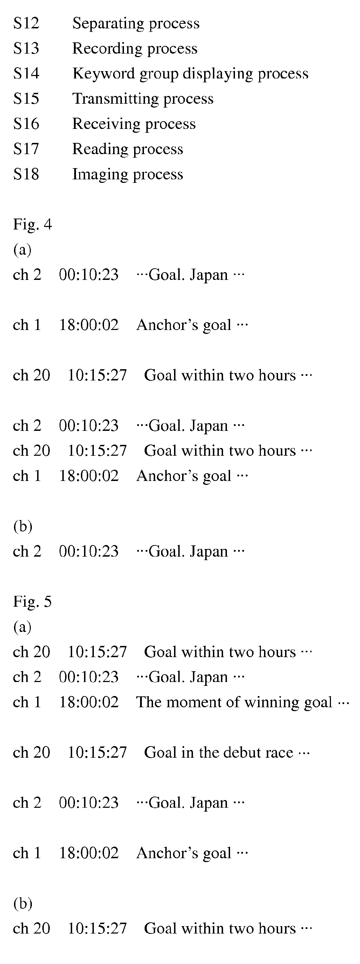

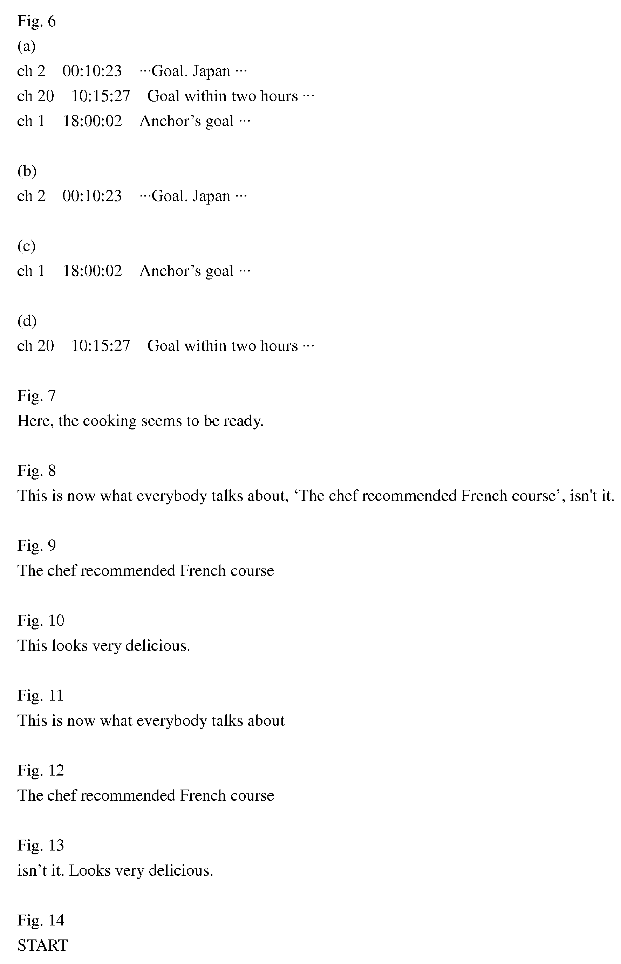

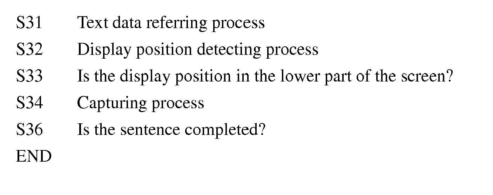

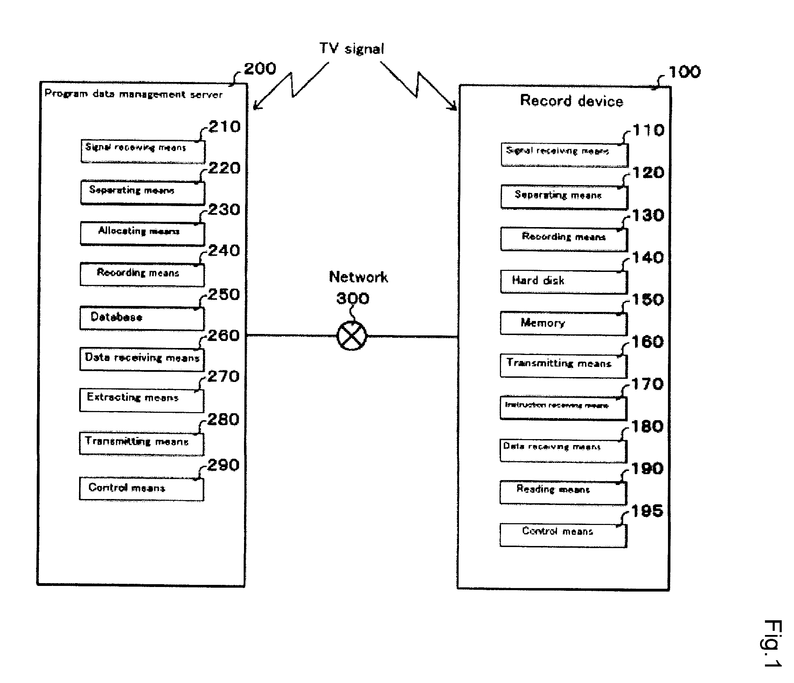

Fig. 1 shows a functional block diagram indicating an exemplary configuration of the program data management system of the embodiment according to the present invention. As shown in Fig. 1, the program data management system of this embodiment is broadly divided into a recording device 100 in which at least the image data and the audio data are recorded among the TV signals transmitted from a TV signal transmitting station, a program data management server 200 for efficiently searching the image data etc. recorded in the recording device 100, and a network 300 such as the Internet connecting between the recording device 100 and the program data management server 200.

The recording device 100 comprises a signal receiving means 110, a separating means120, a recording means 130, a hard disk 140, a memory 150, a transmitting means 160, an instruction receiving means, a data receiving means 180, a reading means 190, and a control means 195, as described hereinafter.

The signal receiving means 110 is composed of an antenna and an analog or digital tuner, etc. The signal receiving means 110 is to receive TV signals that meet predefined conditions among the TV signals transmitted from the TV signal transmitting station.

The TV signals are without regard to its transmission type, and it can be terrestrial analog broadcasting, terrestrial digital broadcasting, analog cable television broadcasting, digital cable television broadcasting, analog satellite broadcasting, digital satellite broadcasting, and the Internet broadcasting, etc.

The separating means 120 is composed of a demultiplexer etc. The separating means 120 is to separate the TV signal output from the signal receiving means 110 into image data, audio data and subtitle broadcast text data.

The subtitle broadcast text means text data into which characters regarding the subtitle broadcast are digitized as needed.

The recording means 130 is composed of an MPEG encoder, an audio encoder, a multiplexer, a hard disk drive, and an operation control part that controls the operation of the hard disk drive, etc. The recording means 130 is to encode and multiplex the image data and audio data separated by the separating means 120, and then to record it to the hard disk 140.

When the image data etc. is recorded to the hard disk 140, the recording means 130 creates a below-described time index, and this time index is together recorded to the hard disk 140. The time index contains positional data that indicates physical or logical address etc. on the hard disk 140, indicating the recording destination of the image data etc. by the recording means 130 and also including a positional data from which the reading means 190 reads out the image data etc.

The hard disk 140 is a recording medium to which the image data etc. is recorded by the recording means 130. The subtitle broadcast text data may be recorded to the hard disk 140 together with the image data etc. In addition, a DVD or flash memory may be used as a recording medium instead of or along with the hard disk 140.

The memory 150 is a storage medium wherein the text data transmitted to the program data management server 200 through the network 300 is stored. The memory 150 registers text data in which frequently used phrases etc. are preset, and text data transmitted to the recording device 100 through the network 300 etc. by operating a mobile phone or personal computer etc. from a user, respectively. However the storage destination of the text data is not limited to the memory 150, and may be the hard disk 140 etc.

The transmitting means 160 is to transmit the text data selected by a user among the text data registered to the memory 150, to the program data management server 200 via the network 300.

The instruction receiving means 170 is to receive various instruction signals transmitted in the form of infrared light etc. from a remote controller (not shown). In one way, the key arrangement of the remote controller can be just like that of mobile phones in view of operability. In addition, the remote controller may be a wired type instead of a wireless type.

The data receiving means 180 is to receive a time index etc. returned from the program data management server 200 via the network 300 in response to the transmission by the transmitting means 160.

The time index, in this context, means an index including time data such as a receipt time etc. of the TV signal and the above-described positional data that are used for effectively playing back the image data etc. recorded to the hard disk 140. The time index, if needed, includes a broadcast station ID for uniquely specifying the broadcast station of the received television signal, or a serial number allocated to the time index itself.

The time indexes are recorded to a database or a file within the hard disk 140, for example, at every second or every breakpoint in the data composing the image stream, and are used when efficiently searching and playing back images at a certain time on a certain date.

One example of the time data is data including the time and date of the receipt of the television signal. If there is a time-lag from the time of the receipt of a television signal to the time that the signal becomes displayable or recordable after decoding, in one way, the time data is set by estimating the time and date of the receipt of the signal from the time and date of the decoding of the signal. If the television signal itself contains the data for on-air time, this may be set as the time data.

The reading means 190 is to read out corresponding image data etc. from the hard disk 140 based on the time index etc. received by the data receiving means 180. The reading means 190 is typically undertaken by the hard disk drive or the operation control part, etc.

The control means 195 is composed of a CPU and a main memory, etc. The control means 195 takes the control of the operations of each means 110 to 190 as described above.

Other than this, the recording device 100 is provided with parts for playing back image data etc. recorded to the hard disk 140, that means, it is provided with a demultiplexer which separates the image data and audio data recorded in the hard disk 140 when playing back these, a MPEG decoder which decodes the separated image data, an audio decoder which decodes the separated audio data, and a D/A converter which converts each decoded data from digital signal to analog signal.

The program data management server 200 comprises a signal receiving means 210, a separating means 220, an allocating means 230, a recording means 240, a database 250, a data receiving means 260, an extracting means 270, a transmitting means 280, and a control means 290, as described hereinafter.

As an example, the program data management server 200 can be configured by the following two separate devices. In other words, one is configured as an identifier allocation device comprising the signal receiving means 210, the separating means 220, the allocating means 230, and a part of the control means 290. And the other part may be configured as a program data management device comprising the recording means 240, the database 250, the data receiving means 260, the extracting means 270, the transmitting means 280, and a part of the control means 290.

The signal receiving means 210 is composed of an antenna and an analog or digital tuner, etc. The signal receiving means 210 is to receive a TV signal transmitted from a TV signal transmitting station.

The separating means 220 is composed of a demultiplexer etc. The separating means 220 is to separate the TV signal output from the signal receiving means 210 into image data, audio data and subtitle broadcast text data.

The allocating means 230 allocates a specific identifier to the element of the subtitle broadcast text data included in the TV signal that was separated by the separating means 220. This identifier may use a time index that uses, for example, the time and date of the receipt of the television signal transmitted from a TV signal transmitting station, and a channel (ch) number allowing the broadcast station regarding the aforementioned television signal to be identified.

The recording means 240 can be realized as a functionality of a database engine. The recording means 240 is to record subtitle broadcast text data to the database 250.

The database 250 is to record a time index etc. allocated by the allocating means 230 and the element of the corresponding subtitle broadcast text data as a pair. The database is without regard to its type, and it may use any types such as object database and relational database as well as other recording methods such as file etc.

The data receiving means 260 is to receive text data that are transmitted from the recording device 100 through the network 300.

The extracting means 270 can be realized as a functionality of a database engine. The extracting means 270 is to search the database 250 based on the text data received by the data receiving means 260 and extract a time index etc. corresponding to the text data from the database 250.

The transmitting means 280 is to transmit the time index etc. extracted by the extracting means 270 to the recording device 100 via the network 300.

The control means 290 is composed of a CPU and a main memory, etc. The control means 290 takes the control of the operations of each means 210 to 280 as described above. If the TV signal is transmitted from the terrestrial digital broadcasting, it is provided with an encrypting means to encrypt the data stream and a decrypting means to decrypt the encrypted data stream.

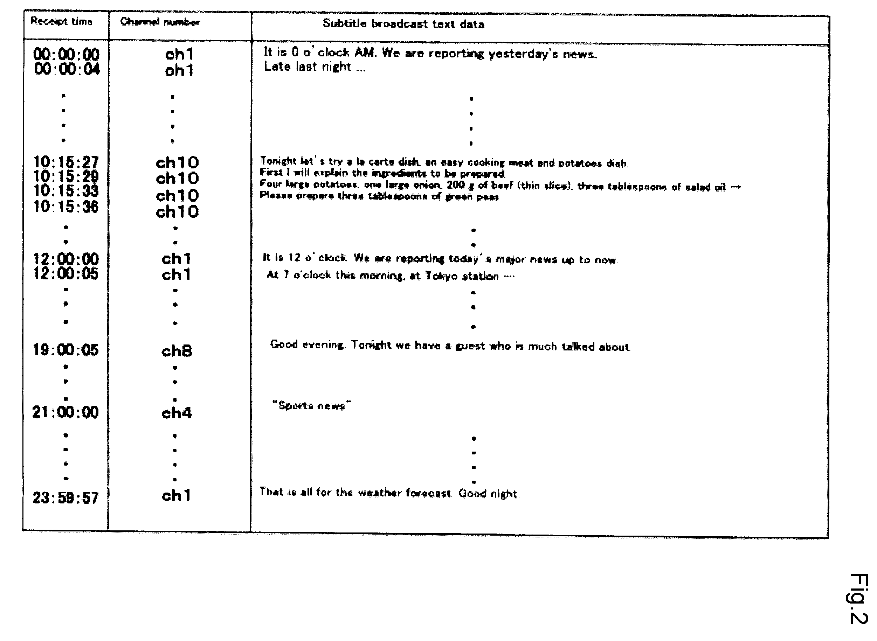

Fig. 2 is a conceptual diagram that indicates the storage content of the database 250 of the program data management server 200 shown in Fig. 1. Fig. 2 shows a status wherein the receipt times of the TV signals transmitted from TV signal transmitting stations, the channel numbers corresponding to each TV signal, and the elements of the subtitle broadcast text data corresponding to the receipt times are stored. The receipt times of the TV signals are shown in one second increment, and one cycle is made from 0h 0m 0s (00:00:00) to 23h 59m 59s (23:59:59).

The receipt time of the TV signal may be timed based on an internal clock of the program data management server 200. This internal clock may be adjusted using NTP (Network Time Protocol) etc. Similarly, the recording device 110 also has an internal clock, and it may be synchronized with the program data management server 200 using the NTP etc.

In addition, instead of the receipt time of the TV signal, the time index may be allocated with reference to the time at which the element of the subtitle broadcast text data is entered to the allocating means 230, or the relative time in which the starting time of the TV program is set to zero, or otherwise the time index may be allocated by the unit based on the TV programs, the TV program segments that constitute the TV program, or CMs incorporated in the TV program.

The record of the subtitle broadcast text data is, for example, performed as follows. That is, as shown in the example, if a TV signal containing an element of subtitle broadcast text data with a content of "It is 0 o'clock AM. We are reporting yesterday's news." begins to be transmitted at 0h 0m 0s from the TV signal transmitting station of the TV station of Channel 1 (ch 1), the allocating means 230 in the program data management server 200 allocates "00:00:00" corresponding to 0h 0m 0s and "ch 1" indicating the channel number to the element of subtitle broadcast text data of "It is 0 o'clock AM. We are now reporting yesterday's news." Then these will be recorded to the database 250 by the recording means 240. Of course, not only the receipt time, the receipt date will be practically stored in an identifiable manner.

Similarly, for example, if a TV signal containing an element of "Tonight let's try a la carte dish, an easy cooking meat and potatoes dish." from 10h 15m 27s, an element of "First I will explain the ingredients to be prepared." at 10h 15m 29s, an element of "Four large potatoes, one large onion, 200 g of beef (thin slice), three tablespoons of salad oil →" at 10h 15m 33s, and an element of "Please prepare three tablespoons of green peas. " at 10h 15m 35s are received from the TV station of Channel 10 (ch 10), the receipt time and channel number are allocated to each element by the allocating means 230.

Instead of recording the element itself of the subtitle broadcast text data to the database 250, the morpheme itself may be recorded. Specifically, a morphological analysis may be performed for the element of the subtitle broadcast text data separated by the separating means 220, and then a time index is allocated to the morpheme by the allocating means 230, before it is recorded.

That means, for the element of "It is 0 o'clock AM. We are reporting yesterday's news.", morphemes such as "AM", "0 o'clock", "yesterday", "news" and "reporting" are the subjects to be stored.

In a status that such data has been recorded to the database 250, if a user, for example, selected the keyword "goal" and this keyword was transmitted from the recording device 100 to the program data management server 200, the time index containing the information indicating the channel number of "ch 20" and the receipt time of "20:12:05" and also the time index including the information indicating the channel number of "ch 2" and the receipt time of "21:10:10", both corresponding to the element of the subtitle broadcast text data containing the keywords "goal" are to be returned from the program data management server 200 to the recording device 100.

The subject to be recorded to the database 250 may be image data or audio data, or otherwise an element of those, instead of the subtitle broadcast text data. In such a case, a part of the image data etc. is transmitted from the recording device 100 to the program data management server 200, and in response, it is matched with the image data etc. recorded to the database 250 in the program data management server 200, and then a time index etc. corresponding to the aforementioned part of the image data etc. may be transmitted to the recording device 100.

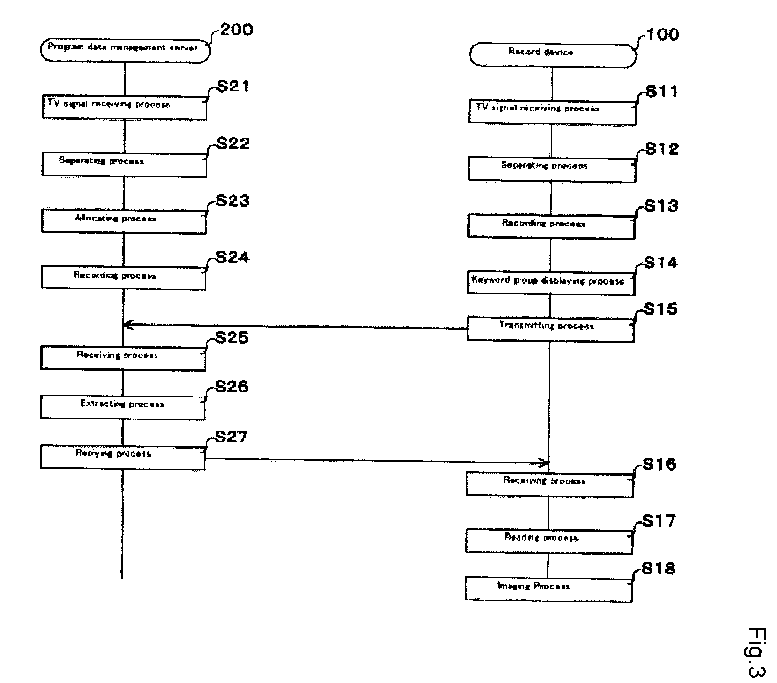

Fig. 3 is a time chart indicating the brief summary of the operation of the program data management system shown in Fig. 1. When the power supply of the recording device 100 is ON, TV signals that match with the set condition of the receiving means 110 are received by the signal receiving means 110 among the TV signals sequentially transmitted from each TV signal transmitting station (Step S11).

The signal receiving means 110 demodulates the received TV signals, and then outputs to the separating means 120. However, if the TV signals are analog signals, an A/D converter (not shown) converts these into digital signals, and then outputs to the separating means 120.

When the separating means 120 inputs the TV signal output from the signal receiving means 110, the TV signal is separated into image data, audio data and subtitle broadcast text data, and then the subtitle broadcast text data is selectively discarded while the image data and audio data are output to the recording means 130 (Step S12).

When inputting the image data and audio data output from the separating means 120, the recording means 130 encodes and multiplexes these, and then sequentially records the image data and audio data to the hard disk 140 (Step S13).

In so doing, if there is no free space necessary for recording the aforementioned image data etc. in the hard disk 140, the aforementioned image data etc., for example, overwrites in the manner of deleting the old data recorded in the hard disk 140.

On the other hand, TV signals sequentially transmitted from each TV signal transmitting station are also received by the signal receiving means 210 in the program data management server 200. The signal receiving means 210 demodulates the received TV signals, and then outputs to the separating means 220. However, if the TV signals are analog signals, an A/D converter (not shown) converts these into digital signals, and then outputs to the separating means 220 (Step S21).

The separating means 220 separates the TV signal output from the signal receiving means 210 into image data, audio data and subtitle broadcast text data, and then the image data and audio data are selectively discarded while the subtitle broadcast text data is output to the allocating means 230 (Step S22).

The allocating means 230, as described with Fig. 2, performs, if required, a morphological analysis for the element of the subtitle broadcast text data output from the separating means 220, and it allocates a time index corresponding to the channel number that allows to identify the broadcast station and the receipt time of the TV signal, and then outputs to the recording means 240 (Step S23).

When inputting the time-index-allocated element of the subtitle broadcast text data output from the separating means 220, the recording means 240 sequentially records this to the database 250 (Step S24).

In so doing, if there is no free space necessary for recording the aforementioned subtitle broadcast text data etc. in the database 250, the recording method 240, if required, deletes old data recorded to the database 250 in order to secure the free space necessary for recording the subtitle broadcast text data etc.

Through the above-described operation, the image data and audio data are recorded to the hard disk 140 of the recording device 100, and the time indexes etc. corresponding to each element of the subtitle broadcast text data are recorded to the database 250 of the program data management server 200.

In this status, it is assumed that a user of the recording device 100 desires to efficiently play back the image data etc. recorded to the recording device 100. Specifically, for example, it is assumed that the user desires to play back image data regarding "soccer scoring scene."

In such a case, the user first displays a keyword group regarding "soccer scoring scene" such as "goal" registered to the memory 150 by operating such as a remote controller (not shown). Next, the user selects the above-described keyword among the displayed Keyword group, and presses down the transmit button etc. on the remote controller, and then the transmitting means 160 transmits the aforementioned keyword from the recording device 100 to the program data management server 200.

The user may enter and transmit a necessary keyword by operating the remote controller etc.

When the user performs the above operation, an instruction signal to show the keyword group in the memory 150 on the display of the TV is transmitted from the remote controller to the recording device 100.

The recording device 100 receives the instruction signal transmitted from the remote controller by the instruction receiving means 170 and outputs to the control means 195. The control means 195 reads out the keyword group from the memory 150 based on the signal output from the instruction receiving means 170, and outputs to an image processing part (not shown). The image processing part creates an image including the keyword group and outputs to the display of the TV (Step S14).

Next, when the user selects a keyword such as "goal" from the keyword group shown on the display of the TV, an instruction signal to transmit the aforementioned keyword to the program data management server 200 is transmitted from the remote controller to the recording device 100 (Step S15).

The recording device 100 receives the instruction signal transmitted from the remote controller by the instruction receiving means 170 and outputs it to the control means 195. When the control means 195 receives the signal output from the instruction receiving means 170, it uses the transmitting means 160 to transmit the text data that is the keyword selected by the user to the program data management server 200 via the network 300.

In the program data management server 200, the data receiving means 260 receives the text data transmitted from the recording device 100 trough the network 300, and outputs to the control means 290 (Step S25).

The extracting means 290 searches the database 250 based on the text data output from the data receiving means 260 by using the extracting means 270, and extracts a time index etc. corresponding to the aforementioned text data. In so doing, a subtitle broadcast text corresponding to the time index may be extracted together (Step S26).

The control means 290 outputs the time index etc. output from the extracting means 270 to the transmitting means 280. When inputting the time index etc. output from the control means 290, the transmitting means 280 replies to the recording device 100 through the network 300 (Step S27).

In the recording device 100, the data receiving means 180 receives the time index etc. and outputs to the control means 195 (Step S16). When inputting the time index etc. output from the data receiving means 180, the control means 195 used the reading means 190 to refer to the hard disk 140 based on the time index etc., and reads out the corresponding image data etc., and then outputs to a playback means (Step S17). The playback means processes decoding etc. for the image data etc., and outputs the post-processed image data etc. to the display of the TV (Step S18).

As a result, the users are also allowed the selection of the image data etc. that they actually desire to watch among the image data etc. shown on the display by controlling the remote controller.

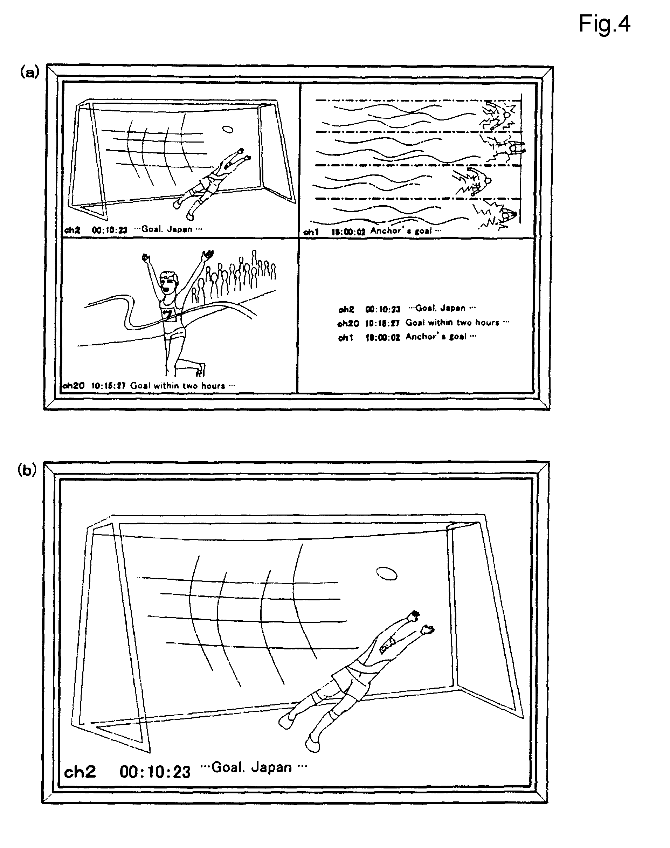

Fig. 4 shows a display example of the display of the TV connected to the recording device 100. Fig. 4(a) shows a display example of the display in the case that, for example, the keyword "goal" is transmitted from the recording device 100 to the program data management server 200.

As shown in Fig. 4(a), this embodiment shows images containing texts such as "ch 2 00:10:23 ···Goal. Japan ···", "ch 20 10:15 :27 Goal within two hours ···" and "ch 1 18:00:02 Anchor's goal ···", and also the image listing the subtitle broadcast texts embedded in these images are listed in the respective quarter areas of the display.

Such a display is performed by the image processing part (not shown) in the recording device 100. In addition, an image that they actually desire to play back among these images is allowed to be selected and played back by using the remote controller.

Fig. 4(b) shows a display example of the display in the case that, for example, the image containing the text "ch 20 10:15:27 Goal within two hours ···" is selected and instructed to play back. When the image containing the text "ch 20 10:15:27 Goal within two hours ···" is selected among the three images shown in Fig. 4(a), this image is first displayed in full screen, and then its playback starts.

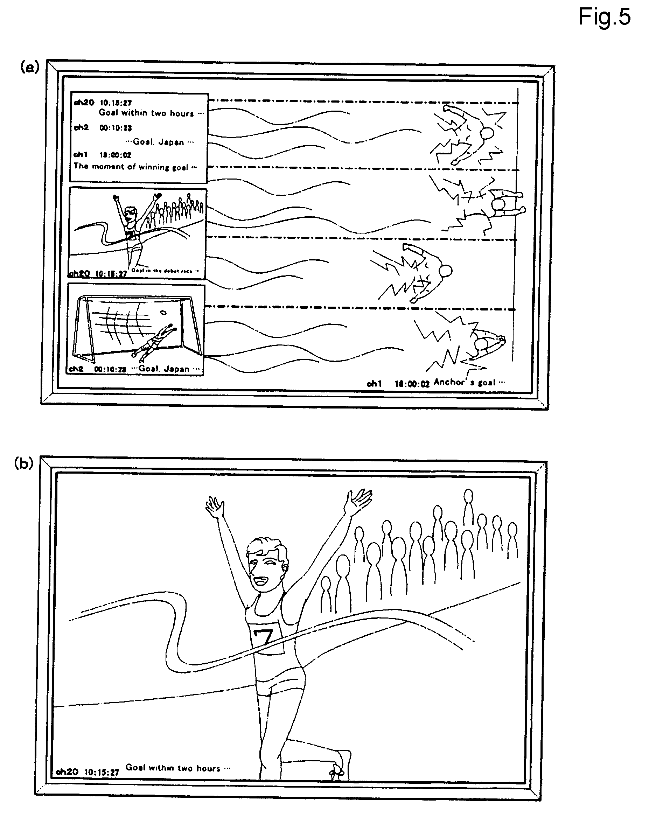

Fig. 5 shows another alternative example for the display example shown in Fig. 4. Fig 5(a) shows the status that when any one of the images shown in Fig. 4(a) is selected, the selected image is enlarged on the display (in this case, the image containing the text "ch 1 18:00:02 Anchor's goal ···"). Then finally, Fig. 5(b) shows a status that the image containing the text "ch 20 10:15:27 Goal within two hours ···" is displayed.

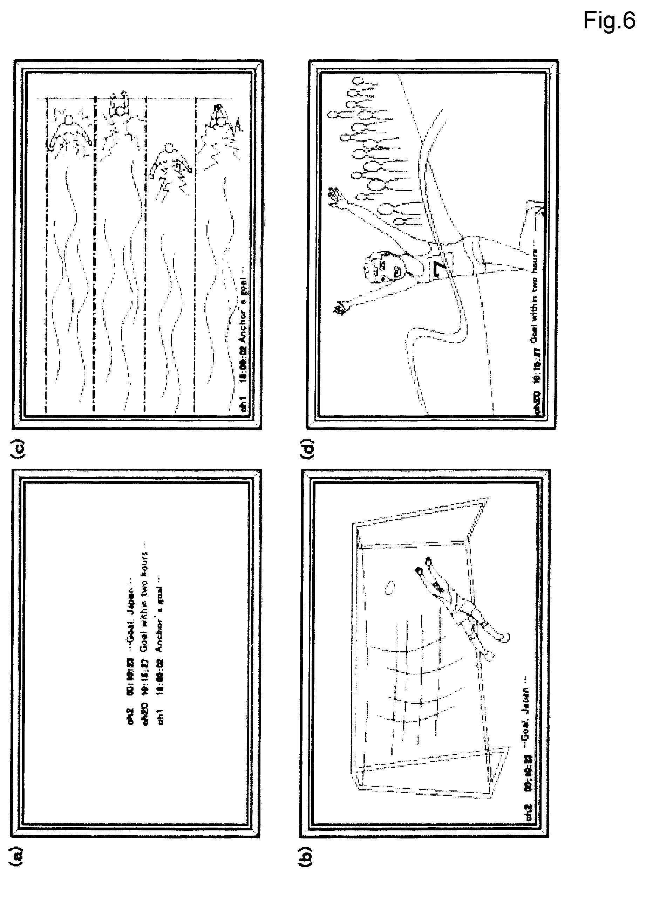

Fig. 6 shows an alternative example of the display example shown in Fig. 4. Fig. 6(a) to Fig. 6(d) show statuses that each image shown in Fig. 4(a) is sequentially switched over and displayed at a given timing, for example, at every 30 seconds. While an image that the user desires to play back is displayed, the user may decide to play back the aforementioned image.

Note that the display mode for the display shall not be limited to the display examples shown in Fig.4 to Fig.6. That means, the example may display quarter-sized images as shown in Fig.4, or may display a thumbnail list corresponding to each image. The shown texts may have an additional headline accordingly, for example, "The Shibuya marathon Ch 20 10:57 Goal within two hours ···", "The Harajuku swimming competition Ch 1 18:00 Anchor's goal ···", and "Japan national soccer team Ch 2 00:10 xxx goal. Japan ···."

### EMBODIMENTS

As described in the embodiments of the present invention, an element of any one of the image data, audio data and subtitle broadcast text data can be used to perform a free keyword search for program images that have been recorded. However, when attempting to use an element of the subtitle broadcast text data to perform the aforementioned search, there are problems as follows.

That is, when a telop is transmitted together with a TV signal from a TV signal transmitting station, there is a case that the subtitle broadcast text data corresponding to the telop part is not included in the TV signal. So, it is a problem since the program images with regard to the aforementioned telop can not be included in the search targets even though a free keyword search is attempted by using the element of the subtitle broadcast text data.

Particularly, the telop part generally displays a part that people want to give an impact to the audience or an important part in many cases, it is considered highly necessary to avoid not to be included in the search.

In this embodiment, several techniques are described to address such a situation.

First of all, the telop part is transcribed into text. Then the technique such as described in the embodiment of the present invention is used to allocate, for example, the time index etc. corresponding to the on-air time of the TV signal containing the telop part to the aforementioned text, subsequently the text and the time index etc. are recorded to the database 250. As a result, even if the free keyword is contained in the telop part at the time of the free keyword search, the text data corresponding to the aforementioned telop has already been created, thus the problem of the program image not included in the search targets does not occur.

There are several techniques to transcribe the telop part into test. It is considered that, for example, the manager etc. of the program data management server 200 can use a keyboard etc. (not shown) to enter the text of the telop part for transcribing it into text. Or as a labor-intensive method, you can possibly have the audience transmit the text data corresponding to the telop part via a network such as the Internet etc.

In addition, the OCR (Optical Character Recognition) technology etc. can be used to transcribe the telop part into text. In this case the following technique allows the extraction of the telop part.

That is, the element of the subtitle broadcast text data is generally shown in the lower part of the screen. And, the telop display is also shown in the lower part of the screen in many cases. However, when the telop is displayed, the element of the subtitle broadcast text data is mainly displayed in the center of the screen so that it does not overlap with the telop display.

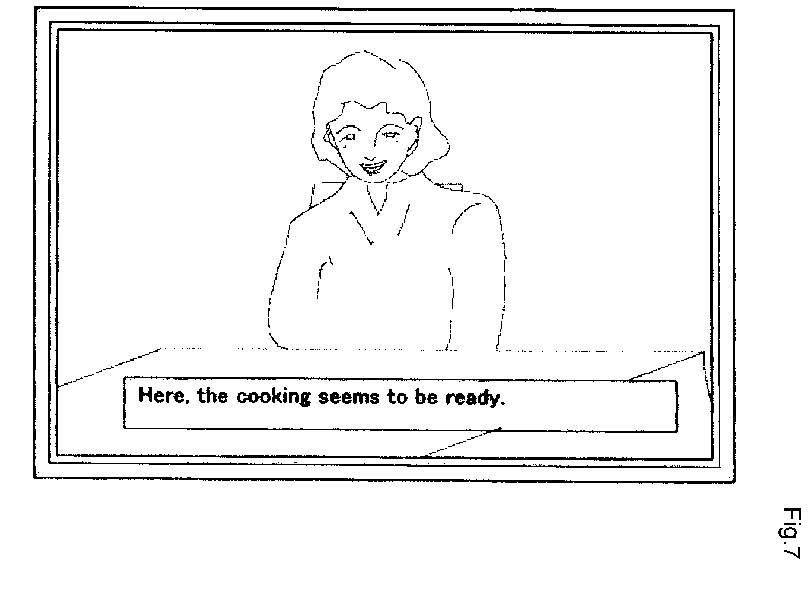

Fig. 7 to Fig. 10 show specific examples of the aforementioned display mode. Hereinafter, as an example, it shows a scene in which a reporter introduces cooking in a segment that introduces seasonal cooking in a cooking report program.

As shown in Fig. 7, first, an element of the subtitle broadcast text data saying "Here, the cooking seems to be ready." is shown in the lower part of the screen.

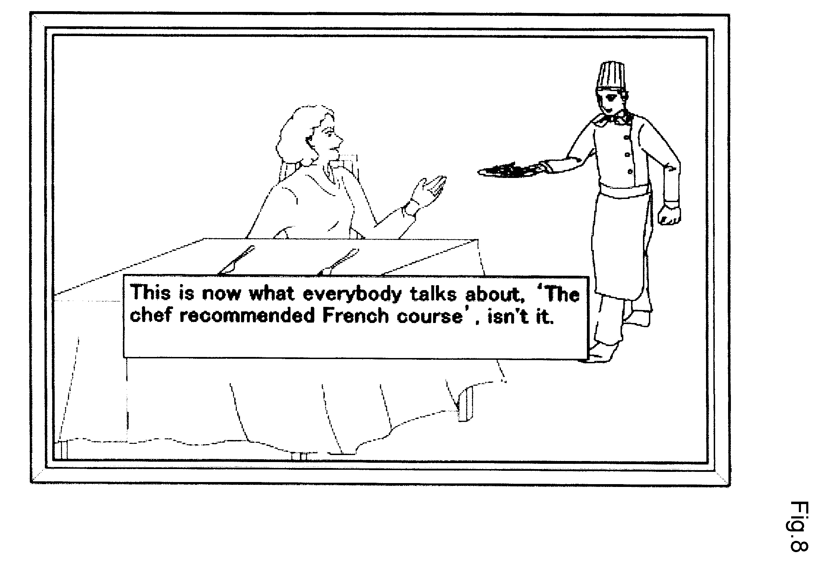

As shown in Fig. 8, next, an element of the subtitle broadcast text data saying "This is now what everybody talks about, "The chef recommended French course', isn't it." is shown in the center of the screen.

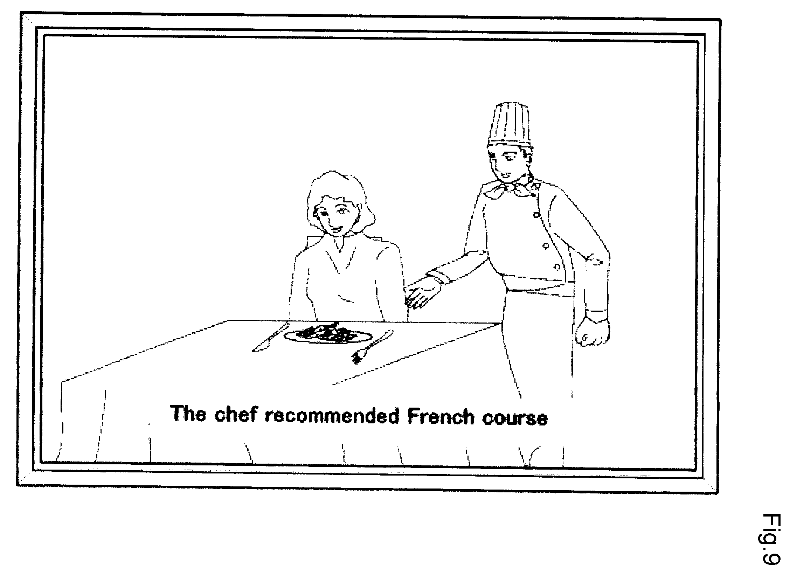

As shown in Fig. 9, a telop saying "The chef recommended French course" is displayed in the lower part of the screen.

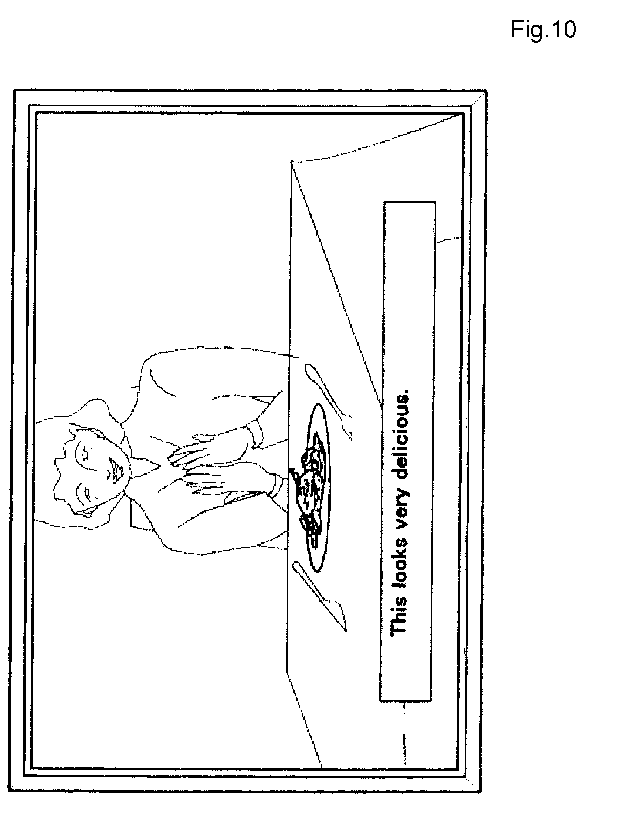

As shown in Fig. 10, subsequently, after the telop display finishes, an element of the subtitle broadcast text data saying "This looks very delicious." is shown in the lower part of the screen.

Here, the information indicating the display position of the subtitle broadcast text data is added to the text data itself. This embodiment uses the information indicating this display position to specify the telop display part, and uses OCR etc to transcribe the specified part into text.

Therefore, the program data management server 200 of this embodiment comprises a detecting means for detecting the information indicating the display position added to the subtitle broadcast text data, a determining means for determining whether the detected display position is in the lower part of the screen, and an extracting means for extracting by capturing the lower part of the screen if the determined display position is not in the lower part of the screen.

Besides, the lower part of the screen extracted by the extracting means might contain a text in the image background, for example, such as a text printed in the clothes of a performer, other than the telop part. In order to avoid such a text part to be transcribed into text, one possible way is that the extracting means processes only a static part by filtering the captured image. The lower part of the screen that is extracted by the extracting means may be input to OCR etc.

Alternatively, as a possible display mode, before the telop is displayed, the element of the subtitle broadcast text data is displayed as usual in the lower part of the screen, and then when the telop part is displayed in the lower part of the screen, instead of overlaying the element of the subtitle broadcast text data, the element of the subtitle broadcast text data may be displayed in the lower part of the screen consecutively after ending the display of the telop part.

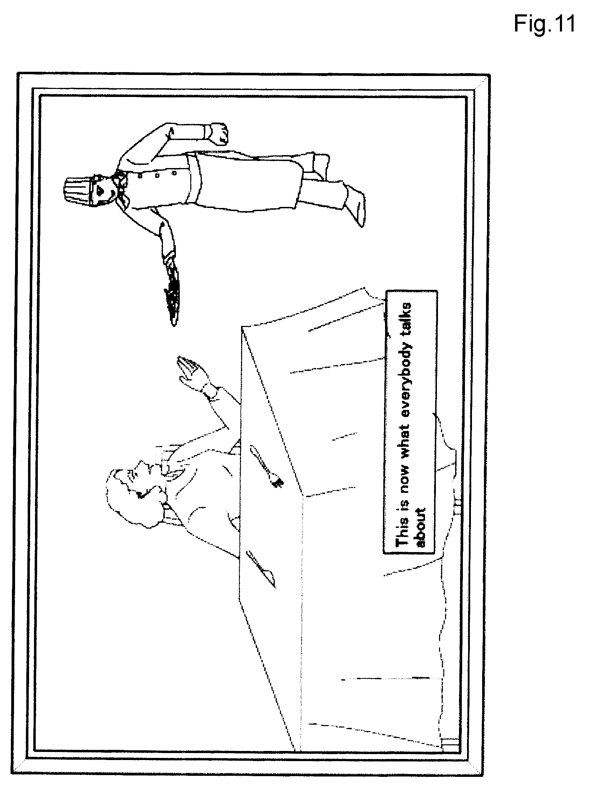

Fig. 11 to Fig. 13 show specific examples of the aforementioned display mode. The same scenes as Fig. 7 etc. are shown as examples.

As shown in Fig. 11, first, an element of the subtitle broadcast text data saying "This is now what everybody talks about" is shown.

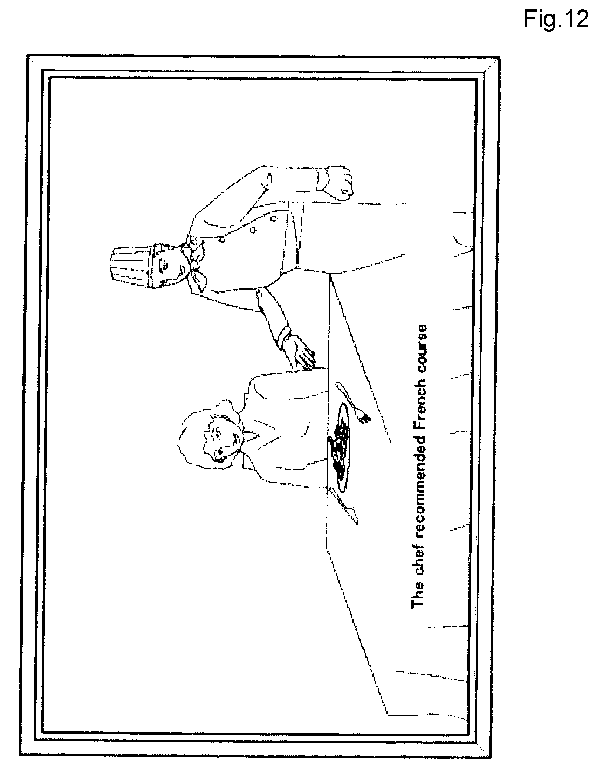

As shown in Fig. 12, next, a telop saying "The chef recommended French course" is displayed.

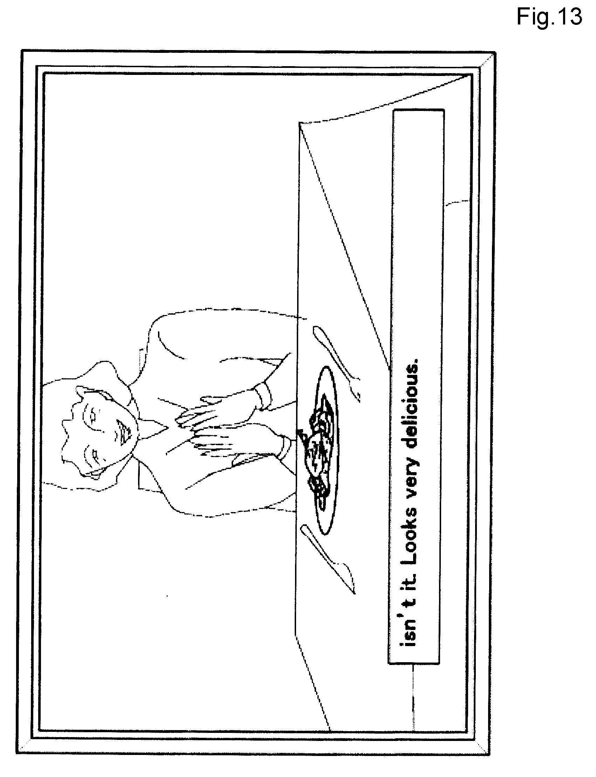

As shown in Fig. 13, subsequently, after the sentence of the telop display, the element of the subtitle broadcast text data saying "isn't it. Looks very delicious." is shown.

In order to extract the telop part even in such a case, a morphological analysis is performed for the element of the subtitle broadcast text data by the text mining etc., and if another sentence with regard to the element shown in Fig. 13 begins even though the sentence with regard to the element shown in Fig. 11 (reefer to the above example) has not yet been completed, it may, assuming that the telop display as shown in Fig.12 is displayed between these elements of the subtitle broadcast text data, extract the lower part of the screen between the aforementioned elements.

In order to achieve this, the program data management server 200 of this embodiment comprises an analyzing means for performing the morphological analysis for the element of the subtitle broadcast text data, a determining means for determining whether the sentence of the analyzed subtitle broadcast text data has been completed, and an extracting means for extracting by capturing the lower part of the screen after displaying the element of the subtitle broadcast text data of which the sentence has not yet been completed as a result of the determination and before displaying the element of the next subtitle broadcast text data.

With reference to the above example, if the content that the reporter talks about is long, the subtitle broadcast text data cannot be entirely displayed in one sentence in the lower part of the screen. In such a case, one sentence is divided into two elements, and "→" is displayed at the end of the first part of the element, and then the following sentence is displayed from the beginning of the second part of the element. Therefore, even though the determining means determines that the sentence is not completed in a single element of the subtitle broadcast text data, if there is "→" at the end of the element, it is adapted not to perform the extracting process by the extracting means.

The analyzing means allows an analysis at a high level by conducting a morphological analysis, however the telop part can be transcribed into text even without the analyzing means. In this case, if there is, for example, neither "." nor "→" at the end of the sentence, the determining means may determine that the sentence has not been completed within the element of the subtitle broadcast text data and thus have the extracting means perform the extracting process.

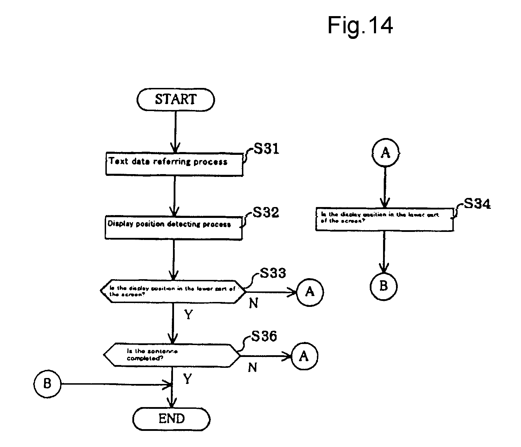

Fig. 14 shows a flowchart indicating an operation for achieving the series of the above operations. As shown in Fig. 14, for example, the subtitle broadcast text data is first referred for each element of the subtitle broadcast text data transmitted from the TV signal transmitting station (Step S31).

Since the information indicating the display position has been added to the element of the subtitle broadcast text data, this information is read out and the position of the element of the aforementioned subtitle broadcast text data is detected (Step S32).

Next, the information indicating the display position of the subtitle broadcast text data is used to perform the determining process on whether the display position of the element of the subtitle broadcast text data is in the lower part of the screen (Step S33).

If the display position of the element of the subtitle broadcast text data is found to be in the lower part of the screen as a result of the determination, Step S35 follows. In contrast, if the display position of the element of the subtitle broadcast text data is found to be not in the lower part of the screen, the lower part of the screen is captured (Step S34).

That means, if the telop is not displayed in the lower part of the screen, Step S35 follows, however, if the telop is displayed in the lower part of the screen, Step S34 follows and performs the capturing process.

If the telop is transcribed into text by the capturing, for example, a time index corresponding to the receipt time of the image data of the capturing target may be allocated to the text data.

Alternatively, the time index itself allocated to the element of the subtitle broadcast text data temporally immediately preceding the image data of the capturing target, that is, the time index itself allocated to the element of the subtitle broadcast text data shown in Fig. 8 may be allocated to the text data, or otherwise the time index of adding, for example, 1 second to this receipt time may be allocated to the text data.

Next, in order to address the case that the element of the subtitle broadcast text data is created in the mode shown in Fig. 14, it analyzes whether the sentence within the element of the subtitle broadcast text data has been completed (Step S35). If the sentence within the element of the subtitle broadcast text data has been completed as a result of the analysis, the process shown in Fig. 14 finishes. In contrast, if the sentence has not been completed, Step S34 follows.

Summarizing the above explanations,
if a telop is not shown in the lower part of the screen, the processes follow in the order of Step S31, S32, S33 and S36,
if a telop is shown in the lower part of the screen and thus the element of the subtitle broadcast text data is displayed in the center of the screen (as shown in Fig. 7 etc.), the processes follow in the order of Step S31, S32, S33 and S34, while
if a telop is shown in the lower part of the screen and there is the same part per se between the telop and the subtitle broadcast text data and thus the display of the subtitle broadcast text data is omitted (shown in Fig. 11 etc.), the processes follow in the order of Step S31, S32, S33, S36 and S34.

### BRIEF DESCRIPTION OF THE DRAWINGS

Fig. 1 shows a functional block diagram indicating an exemplary configuration of the program data management system of the embodiment according to the present invention.
Fig. 2 is a conceptual diagram that indicates the storage content of the database 250 of the program data management server 200 shown in Fig. 1.
Fig. 3 is a time chart indicating the brief summary of the operation of the program data management system shown in Fig. 1.
Fig. 4 shows a display example of the display of the TV connected to the recording device 100.
Fig. 5 shows an alternative example of the display example shown in Fig. 4.
Fig. 6 shows another alternative example of the display example shown in Fig. 4.
Fig. 7 shows a specific example[k1] of the display mode of the present invention.
Fig. 8 shows a specific example of the display mode of the embodiment according the present invention.
Fig. 9 shows a specific example of the display mode of the embodiment according to the present invention.
Fig. 10 shows a specific example of the display mode of the embodiment according the present invention.
Fig. 11 shows a specific example of the display mode of the embodiment according the present invention.
Fig. 12 shows a specific example of the display mode of the embodiment according the present invention.
Fig. 13 shows a specific example of the display mode of the embodiment according the present invention.
Fig. 14 shows a flowchart indicating the operation of the embodiment of the present invention.

### DESCRIPTIONS OF SYMBOLS

- 100:: recording device
- 110, 210:: signal receiving means
- 120, 220:: separating means
- 130, 240:: recording means
- 140:: hard disk
- 150:: memory
- 160, 280:: transmitting means
- 170:: instruction receiving means
- 180, 260:: data receiving means
- 190:: reading means
- 195, 290:: control means
- 200:: program data management server
- 230:: allocating means
- 250:: database
- 270:: extracting means
- 300:: network

## Claims

1. A program data management server comprising:
an allocating means for allocating a specific identifier to any one of the elements among the image data, audio data and subtitle broadcast text data, which constitute a television signal;
a recording medium in which the identifier allocated by the allocating means, and the element are recorded in accordance with each other; and
a transmitting means for, when data indicating the element is transmitted, transmitting the identifier corresponding to said data.

2. The program data management server as claimed in Claim 1, wherein the identifier comprises information that allows the identification of the television signal and a time index attached to the element.

3. The program data management server as claimed in Claim 1, wherein the data indicating the element is transmitted from
communication equipment including mobile phones,
an information processing device including a personal computer, or
a recording device to which at least the image data and audio data are recorded.

4. The program data management server as claimed in Claim 1 comprising:
a means for specifying a telop based on the display position of the subtitle broadcast text data and then creating text data corresponding to said telop; and
the allocating means for allocating the identifier to said created text data.

5. An identifier allocation device comprising:
a receiving means which receives a television signal including the image data, audio data and subtitle broadcast text data;
a separating means for separating the television signal received by the receiving means; and
an allocating means for allocating a specific identifier to the data element separated by the separating means.

6. A program data management device comprising:
a recording medium in which the identifier allocated by the identifier allocation device as claimed in Claim 5 and the element are recorded in accordance with each other; and
a transmitting means for, when data indicating the element is transmitted, transmitting the identifier corresponding to said data.

7. A program data management method comprising:
a step of allocating an identifier to any one of elements among image data, audio data and subtitle broadcast text data, which constitute a television signal;
a step of recording the identifier and the element in accordance with each other, and
a step of, when data indicating the element is transmitted, transmitting the identifier corresponding to said data.

8. A computer program that allows the program data management server to
perform each of the steps as claimed in Claim 7.
